# FASCICULE DE BREVET EUROPEEN

(11) **EP 2 807 197 B1**
(45) Date de publication et mention de la délivrance du brevet: **28.04.2021**
(21) Numéro de dépôt: 13701824.8
(22) Date de dépôt: 04.01.2013
(51) Int. Cl.: C08F 14/06, C08F 214/06, C08F 2/38, C08F 2/42, C08K 3/16, C08K 5/32

(54) **PROCEDE DE PREPARATION DE POLYMERES HALOGENES**
ZWEISTUFENVERFAHREN ZUR HERSTELLUNG VON HALOGENPOLYMEREN
METHOD FOR PREPARING HALOGENATED POLYMERS

(30) Priorité: 24.01.2012 FR 1250656
(43) Date de publication de la demande: 03.12.2014
(73) Titulaire: Arkema France, 92700 Colombes (FR)
(72) Inventeur: BONARDI, Christian, 69230 Saint Genis Laval (FR); TARTARIN, Isabelle, 60200 Compiègne (FR); PASCAL, Thierry, 69600 Oullins (FR); GILIS, Fabrice, Shanghai 200040 (CN)
(74) Mandataire: Arkema Patent
(86) Numéro de dépôt international: PCT/FR2013/050016
(87) Numéro de publication internationale: WO 2013/110865

(56) Documents cités:
- EP-A1- 1 083 185
- WO-A1-2010/084130
- US-A- 6 121 390
- US-A1- 2004 132 930
- US-B1- 6 340 729
- US-B2- 6 723 255
- Anonymous: "Polyvinylchloride (PVC)", Polymers and Polymer Processing , 30 juin 2010 (2010-06-30), XP002674185, BASF Extrait de l'Internet: URL:http://www.performancechemicals.basf.c om/ev-wcms-in/internet/en_GB/portal/show-c ontent_cps_co/content/EV/EV1/new/polymer-p rocessing/polyvinylchloride/polyvinylchlor ide [extrait le 2011-04-18]

## Description

L'invention concerne un procédé de polymérisation, en particulier un procédé de polymérisation en suspension aqueuse ou en émulsion, pour produire des polymères halogénés, en particulier des polymères vinyliques halogénés, tels que par exemple le poly(chlorure de vinyle) (PVC) et copolymères de PVC, produits avec des couleurs améliorées, notamment avec un indice de blancheur élevé, ledit procédé utilisant des combinaisons d'agents d'arrêt de polymérisation (« shortstopper » en langue anglaise), tels que par exemple des hydroxylamines N-substituées.

Dans la fabrication de tels polymères vinyliques halogénés, en particulier de poly(chlorure de vinyle), il est important commercialement d'obtenir le meilleur rendement et la meilleure qualité au moindre coût. Le coût et la performance à la fois des initiateurs de polymérisation et des agents d'arrêt de polymérisation peuvent être des facteurs significatifs dans la maîtrise du rendement et de la qualité du produit obtenu.

Idéalement, les polymères et copolymères vinyliques halogénés, et en particulier le PVC, doivent être produits avec des agents d'arrêt de polymérisation (« shortstoppers » en langue anglaise) et des initiateurs de polymérisation efficaces, bon marché, et non toxiques. Il existe aujourd'hui de nombreux « shortstoppers » utilisables dans ces réactions de polymérisation, dont ceux à structure hydroxylamine. Ceux-ci s'avèrent déjà très performants pour arrêter la polymérisation radicalaire des monomères, mais il reste encore une marge d'amélioration possible pour obtenir une couleur de résine encore plus blanche et moins dégradée thermiquement pendant le procédé de transformation, en particulier pour des polymérisations utilisant des radicaux énergétiques.

On a en effet parfois constaté un jaunissement des polymères, notamment après que ceux-ci aient été mis en forme ou transformés, par extrusion, injection, moulage ou calandrage, et autres traitements à chaud. Ceci est particulièrement vrai dans le cas où sont mis en oeuvre certains initiateurs de polymérisation, en particulier les initiateurs mettant en oeuvre des radicaux peroxydes.

Par exemple, le peroxydicarbonate de di-(2-éthylhexyle) et le peroxydicarbonate de di-(*sec*-butyle), commercialisés par la société Arkema sous les dénominations Luperox® 225 et Luperox® 223, sont deux initiateurs bien connus de l'homme du métier, peu coûteux et qui présentent une bonne efficacité, mais produisent, dans certains cas, du PVC avec des colorations indésirables (après sa mise en forme ou transformation), en particulier lorsqu'ils sont utilisés avec des shortstoppers commerciaux, connus et classiquement utilisés.

Les agents d'arrêt de polymérisation (« shortstoppers ») les plus couramment utilisés pour la polymérisation en suspension aqueuse du chlorure de vinyle sont par exemple le ATSC (acétone-thiosemicarbazone), le bisphénol A (4,4'-isopropylidènediphénol), le nitrite de sodium, l'a-méthylstyrène, le butylhydroxyanisole, le butylhydroxytoluène, l'Irganox® 245 (2,4-diméthyl-6-*sec*-hexadécylphénol), seul ou en mélange avec l'Irganox® 1076 [octadécyl-3-(3,5-di-*tert*-butyl-4-hydroxyphényl)propionate]. L'Irganox® 1141 (ci-après IGX 1141) est un mélange commercial de 80 parties en poids d'Irganox® 245 et de 20 parties en poids d'Irganox® 1076.

Les composés à structure hydroxylamine sont également connus dans l'industrie comme shortstoppers dans la synthèse du PVC, cependant, la plupart des tests ont indiqué que la N,N-diéthylhydroxylamine (DEHA) seule, même utilisée à plus haute concentration, ne permet ni une amélioration de la blancheur de la résine ni une amélioration de la stabilité thermique après transformation de cette résine et n'apporte donc pas toujours un indice de blancheur satisfaisant.

Le brevet US 3,222,334 divulgue déjà que les N,N-dialkylhydroxylamines peuvent être utilisées pour arrêter la polymérisation en émulsion du chlorure de vinyle. Cependant, aucun des exemples ne permet de noter un quelconque avantage à utiliser ces N,N-dialkylhydroxylamines. Ce document suggère que les dialkylhydroxylamines ont un caractère non toxique et de non-décoloration, mais uniquement en référence à une utilisation dans divers caoutchoucs, et la distinction ne peut être établie entre la non-décoloration et la stabilisation de la couleur.

La demande internationale WO 1998/051714 décrit l'utilisation d'éthylhydroxylamine comme agent d'arrêt de polymérisation, présentant en outre une «non-volatilité surprenante», ainsi qu'une faible corrosivité et une bonne solubilité dans l'eau.

Cependant, cette demande internationale, tout en revendiquant l'utilisation de ces agents d'arrêt de polymérisation pour toutes polymérisations radicalaires, ne discute que de la polymérisation en émulsion des caoutchoucs, et tous les exemples illustrent la polymérisation de tels polymères.

Le brevet US 4,749,757 décrit l'utilisation de DEHA (et d'autres inhibiteurs de polymérisation), en association avec un agent de suspension, le poly(alcool vinylique) (PVA) pour augmenter simultanément la densité et la porosité du PVC, par le maintien d'une faible concentration (5 ppm à 10 ppm) dans le réacteur. Toutefois, la DEHA n'est pas présentée comme un shortstopper pour le PVC.

Dans le document JP 02235912, Kanolo et coll. décrivent un «produit de réaction entre la DEHA, le cyclopentadiène et le pyrogallol » qui, lorsqu'il est appliqué sur les parois du réacteur, empêche la formation de tartre ou croûte (« scale » en langue anglaise). Ceci concerne une application connue qui exploite les propriétés des hydroxylamines dans des revêtements afin de conférer des propriétés anti-croûtes aux parois des réacteurs de polymérisation pour la fabrication du PVC.

Le brevet US 6,340,729 décrit l'utilisation de la DEHA avec certains initiateurs de type peroxydes organiques pour améliorer la couleur et la stabilité thermique du PVC. Ce brevet compare l'utilisation de la DEHA avec d'autres shortstoppers communément utilisés et discute de l'utilisation d'excès de shortstopper, qui conduisent à un jaunissement du polymère.

Il est également connu dans l'art antérieur d'utiliser la DEHA comme un agent permettant de « tuer » l'initiateur de polymérisation, afin de stopper l'emballement de la réaction de polymérisation du chlorure de vinyle. Grâce à son excellente et rapide solubilité dans l'eau, la DEHA est efficace pour stopper la polymérisation du chlorure de vinyle lorsque surviennent par exemple une panne de courant inattendue ou des problèmes mécaniques entraînant une panne du système d'agitation.

La demande internationale WO 2010/084130 décrit des systèmes associant un dérivé d'hydroxylamine avec de faibles concentrations de composés phénoliques antioxydants totalement ou partiellement encombrés pour obtenir du poly(chlorure de vinyle) à faible coloration. Néanmoins un tel système a été testé pour obtenir des résines de blancheur très élevée selon des tests normés et jugés sévères et laisse encore des marges d'amélioration.

Un objectif de la présente invention concerne la préparation de polymères et copolymères halogénés, en particulier de PVC, qui possèdent de bonnes propriétés de blancheur, une absence de coloration, tout au moins une coloration très faible, et ne présentant que peu ou pas de jaunissement après la mise en forme ou la transformation desdits polymères.

En effet, dans certaines conditions, notamment de transformation ou de mise en forme, les polymères et copolymères halogénés, en particulier le PVC, préparés selon les procédés connus de l'art antérieur, peuvent présenter des colorations, le plus souvent un jaunissement, ce qui peut représenter une qualité insuffisante pour les utilisations envisagées.

Les inventeurs ont maintenant découvert de manière tout à fait surprenante qu'il est possible de préparer des polymères vinyliques halogénés, en particulier du PVC, qui possèdent de très bonnes propriétés de blancheur, et en particulier de stabilité de l'indice de blancheur (« white index »).

Selon la présente invention, il a été découvert que l'utilisation, lors de la préparation de polymères et de copolymères halogénés, en particulier de PVC, d'une association d'au moins un agent d'arrêt de polymérisation (« shortstopper ») avec au moins un perhalogénate, par exemple un perhalogénate de métal, de métal alcalin ou de métal alcalino-terreux, permet l'obtention de polymères et de copolymères halogénés, en particulier de PVC, présentant de bonnes propriétés de blancheur et de stabilité de l'indice de blancheur.

Ainsi, et selon un premier aspect, la présente invention concerne l'utilisation, d'une association d'au moins un agent d'arrêt de polymérisation (« shortstopper ») avec au moins un perhalogénate, par exemple un perhalogénate de métal, de métal alcalin ou de métal alcalino-terreux, dans le procédé de préparation de polymères et de copolymères halogénés, en particulier de PVC. Cette utilisation permet l'obtention de polymères et de copolymères halogénés, en particulier de PVC, présentant de bonnes propriétés de blancheur et de stabilité de l'indice de blancheur.

Selon un autre aspect, l'invention concerne un procédé de polymérisation en suspension aqueuse, en micro-suspension, en émulsion ou en micro-émulsion, d'au moins un monomère halogéné, en particulier chloré, par exemple de chlorure de vinyle, seul ou avec un ou plusieurs autres monomères vinyliques, de préférence moins de 50% en poids d'un ou plusieurs autres monomères vinyliques, dans lequel on ajoute au moins un shortstopper et au moins un perhalogénate, en tant qu'agent de blanchiment.

Plus précisément la présente invention concerne le procédé de préparation d'un polymère halogéné ou copolymère halogéné, comprenant au moins les étapes suivantes :
a- préparation d'une suspension, d'une micro-suspension, d'une émulsion ou d'une micro-émulsion aqueuse, d'au moins un monomère halogéné, seul ou avec un ou plusieurs autres monomères vinyliques, de préférence moins de 50% en poids d'un ou plusieurs autres monomères vinyliques ;
b- conduite de la réaction de polymérisation ;
c- arrêt de la polymérisation par ajout dans le milieu de polymérisation d'au moins un agent d'arrêt de polymérisation ;
d- ajout d'au moins un perhalogénate, en tant qu'agent de blanchiment, avant, pendant ou après l'étape c d'arrêt de polymérisation ; et
e- essorage et séchage du polymère ou copolymère obtenu.

Dans le procédé de polymérisation ou de copolymérisation ci-dessus, l'étape de polymérisation est avantageusement réalisée en présence d'au moins un initiateur de polymérisation, ladite réaction de polymérisation étant de préférence conduite à une température supérieure à la température ambiante et inférieure à 100°C, de préférence à une température comprise entre 45°C et 80°C, de préférence encore entre 50°C et 70°C.

La réaction de polymérisation ou de copolymérisation est avantageusement conduite jusqu'à un taux de conversion du ou des monomères de départ compris entre 60% et 90% en poids, de préférence entre 65% et 80%, après quoi au moins un agent d'arrêt de polymérisation (« shortstopper ») est ajouté.

Le shortstopper qui peut être utilisé dans le procédé selon la présente invention peut être de tout type connu de l'homme du métier et en particulier le shortstopper est avantageusement choisi parmi les dérivés phénoliques, tels que le butylhydroxyanisole (BHA), le butylhydroxytoluène (BHT), le 2,4-diméthyl-6-sec-hexadécylphénol, l'octadécyl-3-(3,5-di-*tert*-butyl-4-hydroxyphényl)propionate] seul ou en mélange, et les hydroxylamines mono-alkyl-N- ou dialkyl-N,N-substituées, chaque radical alkyle comportant de 1 à 4 atomes de carbone, par exemple la di-éthylhydroxylamine, le 4-OH-Tempo (1,4-dihydroxy-2,2,6,6-tétraméthylpipéridine), ainsi que les mélanges de deux ou plusieurs d'entre eux en toutes proportions, par exemples les mélanges de 2,4-diméthyl-6-*sec-*hexadécylphénol, et d'octadécyl-3-(3,5-di-*tert*-butyl-4-hydroxyphényl)propionate.

On préfère tout particulièrement les hydroxylamines mono-alkyl-N- ou di-alkyl-N,N-substituées, chaque radical alkyle comportant de 1 à 4 atomes de carbone, par exemple la di-éthylhydroxylamine (DEHA), le 4-OH Tempo (1,4-dihydroxy-2,2,6,6-tétraméthylpipéridine), ainsi que les mélanges de deux ou plusieurs d'entre eux en toutes proportions, par exemples les mélanges de 2,4-diméthyl-6-sec-hexadécylphénol, et d'octadécyl-3-(3,5-di-*tert*-butyl-4-hydroxyphényl)propionate. La DEHA est tout particulièrement préférée en tant que shortstopper dans le cadre de la présente invention.

Le perhalogénate utilisé dans le procédé selon la présente invention en association avec au moins un shortstopper permet l'obtention de polymères dotés d'un indice de blancheur élevé. Les perhalogénates qui peuvent être utilisés peuvent être de tout type et en particulier les perhalogénates organiques ou minéraux, de préférence choisis parmi les perhalogénates métalliques, les perhalogénates de métal alcalin ou de métal alcalino-terreux, de manière tout à fait préférée les perchlorates de métal alcalin ou de métal alcalino-terreux, et très avantageusement le perchlorate de sodium.

Le procédé de la présente invention procédé peut en outre avantageusement comprendre une étape d'introduction d'au moins un initiateur de polymérisation. Ce(s) initiateur(s) de polymérisation est(sont) bien connu(s) de l'homme du métier et est(sont) de préférence choisi(s) parmi les peroxydicarbonates de dialkyle, les peroxy-*tert-*alcanoates, les peroxydes de diacyle et les hydroperoxydes d'alkyle, et autres.

Il a également été découvert que l'utilisation d'au moins un perhalogénate avec au moins un agent d'arrêt de polymérisation à structure hydroxylamine lors de la synthèse de polymères ou copolymères halogénés, offre une action rapide et efficace d'arrêt de polymérisation, résultant en des rendements élevés de polymères et copolymères de haute qualité, à faible coût et avec un bon indice de blancheur, des colorations minimes, voire avec une absence de coloration.

Ainsi, le coût global de production de PVC peut être substantiellement réduit en utilisant au moins une association selon la présente invention, c'est-à-dire au moins un agent d'arrêt de polymérisation et au moins un perhalogénate.

Selon un mode de réalisation préféré, la présente invention concerne le procédé de synthèse de polymères et de copolymères vinyliques halogénés en utilisant une association d'au moins un agent d'arrêt de polymérisation (« shortstopper ») avec au moins un perhalogénate, et en utilisant au moins un initiateur de type peroxyde, tel que par exemple choisis parmi les peroxydicarbonates de dialkyle, les peroxy-*tert*-alcanoates, les peroxydes de diacyle et les hydroperoxydes d'alkyle, seuls ou en mélange de deux ou plusieurs d'entre eux en toutes proportions.

Selon un autre aspect, l'invention concerne l'amélioration de la couleur de polymères et de copolymères vinyliques halogénés mis en forme, transformés, extrudés, par exemple injection, moulage, calandrage, et autres, en particulier de PVC extrudé, en utilisant, lors de la synthèse desdits polymères ou copolymères, une association d'au moins un « shortstopper » avec au moins un perhalogénate.

Selon encore un autre aspect, l'invention a pour objet la polymérisation en suspension aqueuse, en micro-suspension aqueuse ou en émulsion aqueuse de chlorure de vinyle, seul ou en mélange avec un ou plusieurs autre(s) monomère(s) vinylique(s), l'initiateur de polymérisation comprenant au moins un peroxyde organique, de préférence choisi parmi les peroxydicarbonates de dialkyle, les peroxy-*tert*-alcanoates, les peroxydes de diacyle et les hydroperoxydes d'alkyle et en utilisant, comme agent d'arrêt de la polymérisation, au moins une mono- ou di-alkylhydroxylamine et au moins un perhalogénate. Les polymères ou copolymères ainsi obtenus présentent une excellente blancheur.

Selon encore un autre mode de réalisation, la présente invention concerne la combinaison d'un système d'amorçage (initiateur) comprenant au moins un composé choisi parmi les peroxydicarbonates de dialkyle, les peroxy-*tert*-alcanoates, les peroxydes de diacyle et les hydroperoxydes d'alkyle et d'au moins un agent d'arrêt de polymérisation, par exemple comportant au moins une N-mono-alkylhydroxylamine ou d'une N,N-dialkylhydroxylamine, et d'au moins un perhalogénate, de préférence au moins un perchlorate, ladite combinaison permettant non seulement d'arrêter la polymérisation de manière efficace, mais aussi d'obtenir, dans le même temps, un polymère ou copolymère vinylique halogéné, par exemple du PVC, présentant de bonnes propriétés de blancheur, et notamment une bonne stabilité de l'indice de blancheur.

Un objet de l'invention est donc un procédé de polymérisation en suspension aqueuse, en micro-suspension, en émulsion ou en micro-émulsion du chlorure de vinyle, seul ou en mélange avec au moins 50% en poids d'un autre monomère vinylique, en présence d'un initiateur de polymérisation comprenant au moins un composé choisi parmi les peroxydicarbonates de dialkyle, les peroxy-*tert*-alcanoates, les peroxydes de diacyle et les hydroperoxydes d'alkyle, procédé dans lequel la formulation de polymérisation contient au moins un agent d'arrêt de polymérisation (« shortstopper ») et au moins un perhalogénate.

Un autre objet de l'invention concerne également un agent de régulation de la polymérisation comprenant la combinaison décrite précédemment d'au moins un agent d'arrêt de polymérisation, par exemple une hydroxylamine N-monosubstituée ou N,N-disubstituée, avec au moins un perhalogénate.

Le système initiateur (ou amorceur) utilisé en procédé suspension ou micro-suspension est avantageusement soluble dans le ou les monomères à polymériser et est généralement composé d'un ou plusieurs composés aptes à générer des radicaux libres qui déclenchent la réaction de polymérisation dudit ou desdits monomères. Le système initiateur utilisé en procédé émulsion (ou micro-émulsion) est classiquement soluble dans la phase aqueuse et déclenchent la réaction de polymérisation dudit ou desdits monomères.

Ces radicaux libres résultent généralement de la décomposition thermique de composés peroxydiques, parmi lesquels on peut par exemple citer les peroxydes de diacyle, les peroxydicarbonates de dialkyle, les peroxy-*tert*-alcanoates et les hydroperoxydes d'alkyle.

Dans la pratique industrielle, pour exprimer la quantité d'initiateur(s) introduit(s) dans le mélange réactionnel, on exprime la teneur totale d'oxygène actif susceptible d'être libéré par le système d'amorçage. La teneur totale d'oxygène actif généralement utilisée est généralement comprise entre 0,0005 parties en poids et 0,01 parties en poids, de préférence entre 0,0015 parties en poids et 0,005 parties en poids, pour 100 parties en poids du ou des monomère(s).

Il est également possible d'utiliser un mélange de composés peroxydiques, chacun d'eux ayant des demi-vies différentes, à une température donnée, la proportion de l'un par rapport à l'autre pouvant varier de 1% à 99% en poids, de préférence de 10% à 90%. À température identique, plus la concentration en initiateur(s) est importante, plus la cinétique de polymérisation est élevée. De même, pour un temps de polymérisation donné, plus la température de réaction est élevée, plus la cinétique de polymérisation est élevée.

Les procédés industriels de polymérisation de monomères vinyliques halogénés communément mis en oeuvre sont habituellement réalisés en mode batch et il est généralement souhaitable d'arrêter la polymérisation après avoir atteint un degré prédéterminé de conversion dudit ou desdits monomère(s), afin d'obtenir un polymère dont les caractéristiques sont bien définies et non-évolutives. Typiquement le taux de conversion du ou des monomères est compris entre environ 60% et environ 90% en poids.

Parmi les peroxydicarbonates de dialkyle qui peuvent être utilisés comme initiateurs de polymérisation, on préfère ceux pour lesquels chaque radical alkyle comporte de 1 à 16 atomes de carbone, en chaîne linéaire, ramifiée ou cyclique. On peut citer, comme exemples non limitatifs de tels peroxydicarbonates de dialkyle, les peroxydicarbonates de diéthyle, de di-isopropyle, de di-n-propyle, de dibutyle, de di-sec-butyle, de dicétyle, de dimyristyle, de di-(4-*tert*-butylcyclohexyle) ou de di-(2-éthylhexyle).

Préférence est donnée aux peroxydicarbonates dans lesquels chaque radical alkyle comprend de 6 à 16 atomes de carbone et plus particulièrement un peroxydicarbonate préféré est le peroxydicarbonate de di-(2-éthylhexyle). Les peroxydicarbonates de dialkyle utilisés dans le cadre de la présente invention sont classés dans la famille des initiateurs rapides. Ils ont généralement une demi-vie de 1 heure à environ 55°C à 70°C et peut donc être utilisé pour des températures de polymérisation de chlorure de vinyle comprises entre 45°C et 70°C.

Il est également possible d'utiliser, comme des exemples non limitatifs d'initiateurs rapides de la famille des peroxy-*tert*-alcanoates, le peroxy-néo-décanoate de 1,1-diméthyl-3-hydroxybutyle, le peroxy-*néo*-décanoate de cumyle, le peroxy-néo-décanoate de 1,1,3,3-tétraméthylbutyle, et le 1,3-di-(2-*néo*-décanoylperoxy-isopropyl)-benzène, le peroxy-néo-décanoate de *tert*-butyle ou de *tert*-amyle), le peroxy-*néo-*heptanoate de *tert*-butyle, le peroxypivalate de 1-(2-éthylhexamylperoxy)-1,3-diméthylbutyle, le peroxypivalate de 1,1,3,3-tétraméthylbutyle, le peroxypivalate de *tert-*amyle (ou de *tert*-butyle). Les peroxy-*tert*-alcanoates sont des initiateurs rapides présentant généralement une demi-vie de 1 heure à environ des températures comprises entre 40°C et 75°C.

Il est également possible d'utiliser, comme exemples non limitatifs d'initiateurs rapides de la famille des peroxydes de diacyle, les peroxydes de di-*iso*-butyryle, de di-(3,5,5-triméthylhexanoyle), de dilauryle, de didécanoyle, de dibenzyle, ayant une demi-vie de 1 heure, à des températures comprises entre environ 39°C et 92°C.

Dans un processus de polymérisation en suspension aqueuse réalisée en discontinu industriellement, il est généralement souhaitable d'arrêter la polymérisation après avoir atteint un degré prédéterminé de conversion, afin d'obtenir un polymère à caractéristiques bien définies et non évolutives. Il peut aussi parfois s'avérer nécessaire, pour arrêter ou tout au moins ralentir la réaction dans la phase finale de polymérisation, c'est-à-dire quand la conversion a atteint des valeurs supérieures à 60% en poids, afin d'éviter des exothermes en fin de réaction qui sont difficiles à contrôler, d'utiliser en général un agent d'arrêt de polymérisation permettant de d'arrêter la réaction.

De tels agents d'arrêt de polymérisation sont bien connus de l'homme du métier. Parmi les plus couramment utilisés pour la polymérisation ou la copolymérisation du chlorure de vinyle, on peut par exemple citer le ATSC (acétone-thiosemicarbazone), le bisphénol A (4,4'-isopropylidènediphénol), le nitrite de sodium, l'α-méthylstyrène, le butylhydroxytoluène le butylhydroxyanisole, l'Irganox® 245 (2,4-diméthyl-6-*sec-*hexadécylphénol), seul ou en mélange avec l'Irganox® 1076 [octadécyl-3-(3,5-di-*tert*-butyl-4-hydroxyphényl)propionate] et la N,N-di-éthylhydroxylamine et ses dérivés.

Les dérivés d'hydroxylamine qui peuvent être utilisés comme « shortstoppers » répondent avantageusement à la formule HO-NR¹R², où R¹ et R² peuvent être identiques ou différents, et sont choisis parmi l'hydrogène, les chaînes hydrocarbonées, linéaires ou ramifiées, saturées ou insaturées, comprenant de 1 à 14 atomes de carbone, chaque chaîne hydrocarbonée pouvant être substituée par un ou plusieurs groupes fonctionnels choisis parmi -OH, -SO₃, benzyle, amino, mercapto, céto, carboxyle, ou R¹ et R² peuvent former ensemble une structure cyclique (comme dans les composés pipéridinyloxy), avec la condition qu'au moins un de R¹ et R² est différent de H.

Des mélanges de deux ou plusieurs de ces agents d'arrêt de polymérisation peuvent être utilisés, y compris les mélanges comprenant au moins un agent d'arrêt de polymérisation défini ci-dessus et un ou plusieurs autres « shortstoppers » connus de l'homme du métier. On peut par exemple citer les mélanges de N,N-di-éthylhydroxylamine et de bisphénol A.

Le shortstopper, et en particulier l'hydroxylamine substituée, utilisé dans le procédé selon la présente invention est introduit en toute quantité et de préférence de manière à obtenir entre 60% et 90% de la conversion du ou des monomères, de préférence entre 65% et 80%, à partir du moment où la pression commence à baisser dans le réacteur de polymérisation. Ainsi, la quantité de shortstopper, en particulier de mono- ou di- alkylhydroxylamine, à utiliser peut varier de 0,0005 à 0,1 parties en poids et de préférence entre 0,001 et 0,05 parties en poids pour 100 parties en poids du ou des monomère(s) à polymériser.

Le « shortstopper » utilisable dans le cadre de la présente invention est choisi de préférence parmi les dialkylhydroxylamines, la dialkylhydroxylamine la plus particulièrement préférée étant la N,N-diéthylhydroxylamine, en raison de sa solubilité dans l'eau, le rendement élevé qu'elle induit, et la grande disponibilité commerciale de ce produit.

Les polymères qui peuvent être fabriquées par le procédé de cette invention comprennent mais ne sont pas limités au chlorure de polyvinyle. L'invention peut s'appliquer de manière similaire à tout polymère halogéné ou copolymère halogéné, parmi lesquels on peut citer, à titre d'exemple non limitatif, le fluorure de polyvinylidène, le poly(fluorure de vinyle), le PTFE, et autres.

Selon la présente invention, au moins un « shortstopper » est utilisé en association avec au moins un perhalogénate métal alcalin ou alcalino-terreux, le terme « association » désignant une introduction simultanée, séparée ou séquencée dans le milieu réactionnel de polymérisation.

Cette « association » peut également comprendre tous types d'additifs communément utilisés par l'homme du métier, par exemple additifs pour améliorer la stabilité thermique des polymères halogénés.

Les perhalogénates qui peuvent être utilisés dans le cadre de la présente invention répondent généralement, et le plus souvent, à la formule M(XO₄)ₙ, dans laquelle X représente un atome d'halogène, M représente le contre-ion de l'anion perhalogénate et l'indice n représente la valence du contre-ion M, en général n représente 1, 2 ou 3.

L'atome d'halogène X du perhalogénate utilisé dans la présente invention est choisi parmi l'atome de fluor (cas des perfluorates), l'atome de chlore (cas des perchlorates), l'atome de brome (cas des perbromates), et l'atome d'iode (cas des periodates). Les perhalogénates particulièrement préférés dans la présente invention sont les perchlorates de formule M(ClO₄)ₙ.

Le contre-ion M peut être de tout type connu de l'homme du métier, et par exemple choisi parmi les métaux, les métaux alcalins, les métaux alcalino-terreux, les terres rares, et autres. Plus spécifiquement, le contre-ion M est choisi parmi lithium (Li), sodium (Na), potassium (K), magnésium (Mg), calcium (Ca), strontium (Sr), baryum (Ba), zinc (Zn), aluminium (Al), lanthane (La) et cérium (Ce). Il est bien entendu que des mélanges de deux ou plusieurs perhalogénates peuvent être utilisés dans le procédé de la présente invention.

Les perhalogénates peuvent être utilisés sous forme de solutions ou sous forme de complexes avec un ou plusieurs alcools (polyols, cyclodextrines), éther- alcools ou ester-alcools. Les ester-alcools comprennent également les esters partiels de polyols, parmi lesquels on peut citer les mono-éthers de glycérol et les mono-thio-éthers de glycérol. D'autres encore sont décrits dans EP 0 394 547, EP 0 457 471 et WO 1994/24200.

Les alcools peuvent également être des alcools polyhydriques (ou polyols), leurs dimères, trimères, oligomères et polymères, comme par exemple les di-, tri-, tétra- et polyglycols, ainsi que les di-, tri- et tétrapenta-érythritols ou les polymères de l'alcool vinylique, quelque soit leurs degré de polymérisation. D'autres solvants possibles des perhalogénates utilisables dans le procédé de la présente invention sont les phosphates ainsi que les carbonates cycliques et acycliques.

Dans ce contexte, les perhalogénates, en particulier les perchlorates peuvent être utilisés sous diverses formes, et par exemple tels quels sous formes de sels ou de solutions dans l'eau et/ou dans un ou plusieurs solvants organiques, ou bien adsorbés sur un matériau support tel que PVC, silicates de calcium, zéolithes ou hydrotalcites, ou encore liés, après réaction chimique, à au moins une hydrotalcite, ou autres composés à réseau en couches.

Parmi les perhalogénates, on préfère tout particulièrement les perchlorates de potassium, de sodium et de calcium, et de manière tout particulièrement préférée le perchlorate de sodium et/ou le perchlorate de potassium. À titre d'exemple, on peut utiliser dans le cadre de la présente invention le perchlorate de sodium, commercialisé par la société Arkema, en solution à environ 70% en poids dans l'eau.

Les additifs qui peuvent être utilisés pour améliorer la stabilité thermique sont bien connus de l'homme du métier comme stabilisants thermiques ou co-stabilisants thermiques des polymères halogénés et peuvent être utilisés en association ou indépendamment de la combinaison « shortstopper/perhalogénate » telle que décrite dans la présente invention. De tels stabilisants ou co-stabilisants sont par exemple décrits dans WO 2006/058789.

Parmi les additifs permettant d'améliorer la stabilité thermique, on peut citer les acides mercaptocarboxyliques, par exemple l'acide 2-éthylhexylmercapto-acétique et l'acide thioglycolique, ainsi que leurs esters ; les carbonates de métaux alcalins, par exemple le carbonate de sodium ; les β-dicétones ; les huiles végétales époxydées, par exemple huile de soja époxydée, huile de lin époxydée ; les phosphites ; les esters β-cétoniques ; les sels ou savons métalliques en particulier les stéarates, par exemple le stéarate de calcium, de baryum et/ou de zinc, les adipates, par exemple l'adipate de disodium ; les dérivés amino-uraciles et/ou dérivés thio-uraciles ; les hydrazides ; les composés minéraux tels que les hydrotalcites et les zéolithes ; les alcools et polyols, notamment les alcools issus de saccharide ; les dérivés du glycidyle, l'a-phénylindole ; les composés de type dihydropyridine tels que ceux décrits dans FR 2 429 806, EP 0 027 439 ou WO 2002/092686, et spécifiquement la dihydropyridine et les dérivés de poly(dihydropyridine), plus particulièrement la dihydro-1,4-diméthyl-2,6-dicarbododécyloxy-3,5-pyridine (Stavinor® D507, Arkema) ou le thiodi-éthanol-bis-(5-méthoxy-carbonyl-2,6-diméthyl-1,4-dihydropyridine-3-carboxylate (Synesal® M, Lagor) ; les énamines, par exemple telles que décrites dans le brevet DE 10 118179 ; les dérivés de type alcanolamines; et autres, seuls ou en mélanges de deux ou plusieurs d'entre eux, en toutes proportions.

Comme stabilisants et co-stabilisants thermiques de type polyols, on peut citer plus particulièrement les polyols et les alcools issus de disaccharides choisis parmi le penta-érythritol, le dipenta-érythritol, le tripenta-érythritol, le triméthyloléthane, le triméthylolpropane, le bis-triméthyloléthane, le bis-triméthylolpropane, les cyclitols (parmi lesquels l'inositol), les poly(alcool vinyliques), les hexitols (parmi lesquels le sorbitol), le maltitol, l'iso-maltitol, le cellobiitol, le lactitol, la lycasine, le mannitol, le lactose, le leucrose, le tris(hydroxy-éthyl)isocyanurate, les tris(hydroxypropyl)isocyanurate, le palatinitol, le tétraméthylolcyclohexanol, le tétraméthylolcyclopentanol, le tétraméthylolcyclopyranol, le xylitol, les pentitols (parmi lesquels l'arabinitol), les tétritols, le glycérol, le diglycérol, le polyglyérol, le thiodiglycérol et le dihydrate de 1-O-α-D-glycopyranosyl-D-mannitol. Parmi ceux-ci, on préfère tout particulièrement les alcools de disaccharide.

Les hydrotalcites qui peuvent être utilisées comme co-stabilisants sont bien connues de l'homme du métier et sont par exemple décrites dans DE 384 35 81, EP 0 062 813 et WO 1993/20135.

Plus spécifiquement, les composés appartenant à la famille des hydrotalcites peuvent être représentés par la formule générale suivante :

G²⁺₁₋ₓG³⁺ₓ(OH)₂(An^{b-})_{x/b}.dH₂O

dans laquelle
G²⁺ représente un ou plusieurs métaux choisi(s) dans le groupe comprenant Mg, Ca, Sr, Zn et Sn,
G³⁺ représente l'atome d'aluminium (Al) ou l'atome de bore (B),
An est un anion de valence n,
b est un nombre compris entre 1 et 2, bornes incluses,
0 < x <0,5, et
d est un nombre compris entre 0 et 300, bornes incluses, de préférence entre 0,5 et 30, bornes incluses,
et de préférence An est choisi parmi OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ or HPO₄²⁻.

Des exemples tout à fait appropriés à la présente invention sont Al₂O₃6MgO CO₂ 12H₂O (i), Mg_{4,5}Al₂(OH)₁₃CO₂3.5H₂O (ii), 4MgO Al₂O₃ CO₂9H₂O (iii), 4MgOAl₂O₃CO₂6H₂O, ZnO3MgOAl₂O₃CO₂8-9H₂O et ZnO3MgOAl₂O₃CO₂5-6H₂O, et parmi ceux-ci les hydrotalcites tout particulièrement préférées sont celles référencées ci-dessus sous i, ii and iii.

Comme indiqué ci-dessus, l'anion des hydrotalcites peut être un anion perchlorate, et dans ce cas représente un mode de réalisation préférentiel de l'invention. Lorsque l'additif de stabilisation ou de co-stabilisation est une hydrotalcite à anion perhalogénate, et en particulier à anion perchlorate (ClO₄⁻), celle-ci peut avantageusement se substituer en partie, voire en totalité au(x) perhalogénate(s) utilisé(s) comme agent de blancheur en association avec l'agent d'arrêt de polymérisation, selon le procédé objet de la présente invention.

Les stabilisants ou co-stabilisants peuvent également être choisis parmi les zéolithes connues de l'homme du métier, et en particulier celles répondant à la formule générale T_{x/n}[(AlO₂)ₓ(SiO₂)_{y}]wH₂O, dans laquelle
T est un métal alcalin ou alcalino-terreux, de préférence choisi parmi Li, Na, K, Mg, Ca, Sr et Ba,
n représente la charge du cation T,
y:x est un nombre compris entre 0,8 et 15 bornes incluses, de préférence entre 0,8 et 1,2, bornes incluses, et
w est un entier compris entre 0 et 300, bornes incluses, de préférence entre 0,5 et 30, bornes incluses.

Des exemples de zéolithes comprennent avantageusement les aluminosilicates de sodium de types zéolithe A, sodalite, zéolithe Y, zéolithe X, zéolithe LSX; et les zéolithes préparées par remplacement partiel ou total des ions sodium par les ions Li, K, Mg, Ca, Sr ou Zn, ainsi que les zéolithes P, MAP, et autres zéolithes obtenues après remplacement partiel ou total des ions sodium par des ions Li, K ou H, telles que les zéolithes K-F, les zéolithes D, et autres.

Comme exemples de phosphites (triesters phosphoreux), thiophosphites et thiophosphates, on peut citer le triphénylphosphite, les diphénylalkylphosphites, les phényldialkylphosphites, le tris(nonylphényl)phosphite, le trilaurylphosphite, le tri-octadécylphosphite, le distéarylpentaérythritoldiphosphite, le tris(2,4-di-*tert*-butylphényl)-phosphite, le di-isodecylpentaérythritoldiphosphite, le bis(2,4-di-*tert*-butylphényl)pentaérythritoldiphosphite, le bis(2,6-di-*tert*-butyl-4-méthylphényl)pentaérythritoldiphosphite, le bis(isodécyloxy)penta-érythritoldiphosphite, le bis(2,4-di-*tert*-butyl-6-méthylphényl)pentaérythritoldiphosphite, le bis(2,4,6-tri-*tert*-butylphényl)pentaérythritoldiphosphite, le tri-stéarylsorbitoltriphosphite, le bis(2,4-di-*tert*-butyl-6-méthylphényl)méthylphényl)méthyl-phosphite, le bis(2,4-di-*tert*-butyl-6-méthylphényl)éthylphosphite.

On préfère tout particulièrement les trioctyl-, tridécyl-, tridodécyl-, tritétradécyl-, tristéaryl, trioléyl, triphényl, tricrésyl, tris-p-nonylphényl- et tricylcohexyl-phosphites et, de manière particulièrement préférée, les aryldialkyl- et les alkyldiaryl-phosphites, et parmi ceux-ci le phényldidécylphosphite, le 2,4-di-*tert*-butylphényldidodécylphosphite, le 2,6-di-*tert*-butylphényldidodécylphosphite et les dialkyl- et diarylpentaérythritoldiphosphites, tels que le distéarylpentaérythritoldiphosphite, ainsi que les triarylphosphites non-stœchiométriques, dont la composition est, par exemple, (H₁₉C₉-C₆H4)O₁₋₅P(OC_{12,13} H_{25,27})_{1.5} ou (H₈C₁₇-C₆H₄)O₂P(i-C₈H₁₇O) ou encore (H₁₉C₉-C₆H₄)O_{1.5}P(OC_{9,11}H_{19,23})_{1,5}.

Les phosphites organiques préférés sont le distéarylpentaérythritoldiphosphite, le trisnonylphénylphosphite et le phényldidécylphosphite. D'autres phosphites utilisables sont les diesters phosphoreux (avec les radicaux définis ci-dessus) et les mono-esters phosphoreux (avec les radicaux définis ci-dessus), éventuellement sous la forme de leurs sels de métaux alcalins, alcalino-terreux, de zinc ou d'aluminium. Ces esters phosphoreux peuvent également être utilisés comme composé « alumo-sel », comme décrit par exemple dans DE-A-403 18 18.

Parmi les β-dicétones et les β-céto-esters qui peuvent être utilisés, on peut citer les composés 1,3-dicarbonylés, linéaires ou cycliques. On préfère utiliser les composés dicarbonylés répondant aux formules suivantes : R'₁COCHR'₂-COR'₃ dans laquelle R'₁ représente C₁-C₂₂-alkyle, C₅-C₁₀-hydroxyalkyle, C₂-C₁₈-alkényle, phényle, HO-, C₁-C₄-alkyle, C₁-C₄-alkoxy ou phényle substitué par halogène(s), C₇-C₁₀-phénylalkyle, C₅-C₁₂-cycloalkyle, C₅-C₁₂cycloalkyle substitué par C₁-C₄-alkyle(s), ou un groupe -R'₅-S-R'₆ ou -R'₅-O-R'₆, R'₂ représente l'atome d'hydrogène, C₁-C₈-alkyle, C₂-C₁₂-alkényle, phényle, C₇-C₁₂-alkylphényle, C₇-C₁₀-phénylalkyle ou un groupe -CO-R'₄, R'₃ est tel que défini pour R'₁ ou représente C₁-C₁₈-alkoxy, R'₄ est un C₁-C₄-alkyle ou phényle, R'₅ est un C₁-C₁₀-alkylène et R'₆ est un C₁-C₁₂alkyle, phényle, C₇-C₁₈-alkylphényle ou C₇-C₁₀-phénylalkyle.

De tels composés comprennent les dicétones hydroxylées décrites dans EP 0 346 279 et les oxa- et thia-dicétones décrites dans EP 0 307 358, ainsi que les céto-esters d'acide isocyanique décrits dans US 4,339,383.

Des exemples d'esters mercaptocarboxyliques comprennent les esters des acides thioglycolique, thiomalique, mercaptopropionique, mercaptobenzoïque et thiolactique, le stéarate de mercaptoéthyle et l'oléate de mercaptoéthyle, tels que décrits dans FR 2 459 816, EP 0 090 748, FR 2 552 440 et EP 0 365 483. La définition générique des esters mercaptocarboxyliques comprend également les esters de polyols et leurs esters partiels, ainsi que leurs dérivés thioéthers. Ces molécules peuvent également être des mercaptides latents, comme par exemple ceux décrits dans EP 0 945 485.

Les savons métalliques qui peuvent être utilisés comme stabilisants ou co-stabilisants dans le cadre de la présente invention comprennent, à titre d'exemples non limitatifs, les carboxylates métalliques des acides carboxyliques à chaîne relativement longue. Des exemples typiques sont les stéarates et les laurates, ainsi que les oléates et les sels d'acides carboxyliques à chaîne plus courte. Les acides alkylbenzoïques sont également compris comme étant des exemples des savons métalliques.

Parmi les métaux qui peuvent être mentionnés, on peut citer Li, Na, K, Mg, Ca, Sr, Ba, Zn, Al, La, Ce et les terres rares. On peut aussi souvent utiliser ceux qui sont connus pour former des mélanges synergiques, tels que les mélanges de stabilisants baryum/zinc, magnésium/zinc, calcium/zinc ou calcium/magnésium/zinc. Les savons métalliques peuvent être utilisés seuls ou en mélanges. Une liste des savons métalliques les plus communément utilisés est présentée dans « Ullmann's Encyclopedia of Industrial Chemistry », 5e Éd., Vol. A16 (1985), p. 361 sqq.). Il est avantageux d'utiliser des savons organo-métalliques appartenant à la famille des carboxylates aliphatiques saturés en C₂-C₂₂, les carboxylates aliphatiques insaturés en C₃-C₂₂, les carboxylates aliphatiques en C₂-C₂₂ substitués par au moins un groupement OH, les carboxylates cycliques et bicycliques ayant de 5 à 22 atomes de carbone, les benzènecarboxylates non-substitués, substitués par au moins un groupement -OH et/ou par un radical C₁-C₁₆-alkyle, les naphtalènecarboxylates non-substitués, substitués par au moins un groupement -OH et/ou par un radical C₁-C₁₆-alkyle, le phényl-C₁-C₁₆-alkylcarboxylates, le naphtyl-C₁-C₁₆-alkylcarboxylates ou les phénolates non-substitués ou substitués par un radical C₁-C₁₂-alkyle, les tallates et les résinâtes.

Des exemples nominatifs qui peuvent être cités sont les sels de zinc, de calcium, de magnésium ou de baryum d'acides carboxyliques monovalents, tels que acides acétique, propionique, butyrique, valérique, hexanoïque, œnanthique, octanoïque, néodécanoïque, 2-éthylhexanoïque, pélargonique, décanoïque, undécanoïque, dodécanoïque, tridécanoïque, myristique, palmitique, isostéarique, stéarique, 12-hydroxystéarique, béhénique, benzoïque, p-*tert*-butylbenzoïque, 3,5-di-*tert*-butyl-4-hydroxybenzoïque, toluïque, diméthylbenzoïque, éthylbenzoïque, n-propylbenzoïque, salicylique, p-*tert*-octylsalicyclique et sorbique ; les sels de calcium, magnésium ou de zinc des mono-esters d'acides carboxyliques divalents tels que les acides oxalique, malonique, succinique, glutarique, adipique, fumarique, pentane-1,5-dicarboxylique, hexane-1,6-dicarboxylique, heptane-1,7-dicarboxylique, octane-1,8-dicarboxylique, phtalique, isophtalique, téréphtalique et hydroxyphtalique; et les di- ou tri-esters d'acides carboxyliques tri- ou tétra-valents tels que les acides hémimellitique, trimellitique, pyromellitique et citrique.

On préfère tout particulièrement les carboxylates de calcium, de magnésium et de zinc, provenant d'acides carboxyliques possédant de 7 à 18 atomes de carbone (sels métalliques, au sens étroit), tels que, par exemple, les benzoates ou alkanoates, de préférence les stéarates, oléates, laurates, palmitates, béhénates, hydroxystéarates, dihydroxystéarates ou 2-éthylhexanoates. On préfère tout particulièrement les stéarates, oléates et les p-*tert*-butylbenzoates. Les carboxylates surbasiques, tels que l'octoate de zinc surbasique, sont également préférés. De même on préfère également les savons surbasiques de calcium. Si on le souhaite, il est également possible d'utiliser un mélange de carboxylates de structures différentes. On préfère dans ce cas les compositions, telles que décrites précédemment, comprenant un composé organozinc et/ou organocalcium.

D'autres exemples typiques de savons ou de sels métalliques qui peuvent être mentionnés, on peut citer les sels dimétalliques d'acides dicarboxyliques, tels que les sels de dilithium, de disodium ou de dipotassium d'acides carboxyliques divalents, tels que les acides oxalique, malonique, succinique, glutarique, adipique, fumarique, pentane-1,5-dicarboxylique, hexane-1,6-dicarboxylique, heptane-1,7-dicarboxylique, octane-1,8-dicarboxylique, phtalique, isophtalique et téréphtalique. On préfère tout particulièrement l'adipate de disodium.

En ce qui concerne les autres stabilisants et co-stabilisants métalliques, on peut citer les stabilisants organométalliques et, en particulier, les stabilisants organo-étain. Ceux-ci peuvent être des carboxylates, des maléates, des mercaptides et des sulfures, en particulier. Des exemples de tels composés sont décrits dans US 4,743,640, US 2,567,651, US 2,598,936, US 2,567,652, US 6,174,941, US 5,925,696, US 6,156,830, US 6,084,013, US 6,194,494, US 4,105,627, US 4,352,903, et DE 2,427,853.

En ce qui concerne des exemples d'amino-uraciles, on se référera en particulier aux structures décrites dans US 4,656,209, US 5,859,100, US 5,925,696, US 6,084,013.

Par «polymérisation en suspension ou microsuspension aqueuse », on entend une polymérisation réalisée en présence d'au moins un initiateur soluble dans l'huile, et d'au moins un monomère halogéné insaturé, par exemple chlorure de vinyle seul ou en mélange avec un autre monomère vinylique, et qui sont dispersés par tout moyen mécanique dans un milieu aqueux comprenant au moins un agent de suspension.

La proportion de monomère vinylique dans la suspension est généralement d'au moins 50% en poids, de préférence supérieure à 80% par rapport au poids total de la suspension. Une proportion de monomère vinylique inférieur à 50% en poids, par rapport au poids total de la suspension, est toutefois envisageable dans le cadre de la présente invention.

Les monomères vinyliques qui peuvent être copolymérisés dans une suspension aqueuse avec un halogénure de vinyle, chlorure de vinyle en particulier, sont bien connus de l'homme du métier, et parmi ceux-ci, on peut citer, à titre d'exemples non limitatifs, les esters vinyliques tels que l'acétate de vinyle, les halogénures de vinylidène tels que le chlorure de vinylidène et le fluorure de vinylidène, les esters acryliques tels que l'acrylate de butyle, et les esters méthacryliques tels que le méthacrylate de méthyle.

Les agents de dispersion ou de suspension généralement utilisés dans la polymérisation en suspension sont également bien connus de l'homme du métier, et sont notamment choisis parmi les colloïdes protecteurs, par exemple polymères hydrosolubles tels que les poly(alcools vinyliques), les oxydes de polyéthylène, les dérivés de cellulose hydrosolubles, comme la méthylcellulose, la poly(vinylpyrrolidone), les copolymères acétate de gélatine et de vinyle / anhydride maléique et autres, ainsi que les mélanges de deux ou plusieurs d'entre eux en toutes proportions.

Ces agents de suspension peuvent être utilisés seuls ou sous forme de mélanges dans des quantités généralement comprises entre 0,01 et 0,5 parties en poids, de préférence entre 0,04 et 0,2 parties en poids, pour 100 parties en poids de composant(s) monomère(s).

Le procédé selon la présente invention peut également être mis en oeuvre avec un système tampon, permettant de contrôler le pH du milieu réactionnel en cours de polymérisation. En effet, le pH du milieu aqueux est par exemple d'environ 6 à 7 en début de la réaction, et peut chuter jusqu'à près de environ 3,5 en raison de la production d'acide halohydrique, notamment chlorhydrique, dans le milieu réactionnel. Il est ainsi préférable, mais non nécessaire, dans le cadre de l'invention de tamponner la suspension aqueuse.

Les systèmes tampons typiques qui peuvent être utilisés incluent, mais ne sont pas limités à, ceux comprenant carbonate, bicarbonate, phosphate ou citrates. La gamme de pH du système tampon est comprise entre 5 et 8 et de préférence entre 5,5 et 7,5. Le système tampon est généralement utilisé en quantité comprise entre 0,01 et 0,2 parties en poids, de préférence entre 0,02 et 0,1 parties en poids, pour 100 parties en poids de monomère(s).

Selon un autre mode de réalisation, le procédé de la présente invention peut également mettre en oeuvre au moins un antioxydant qui est ajouté au milieu réactionnel, soit en début de réaction ou lorsque la conversion souhaitée est atteint. Le au moins un antioxydant peut être introduit en une fois ou en plusieurs fois, ou encore en continu dans le réacteur, au cours de la réaction de polymérisation.

Parmi les anti-oxydants connus de l'homme du métier qui peuvent être utilisés dans le procédé de la présente invention, on préfère notamment les anti-oxydants à groupe phénoliques, et de préférence à groupe phénolique stériquement encombrés, et à titre d'exemples non limitatifs ceux choisis parmi le butylhydroxyanisole, le butylhydroxytoluène, l'Irganox® 1076 de Ciba, l'Irganox® 245 de Ciba, et l'Isonox® 132 (2,6-di-*tert*-butyl-4-*sec-*butylphénol) de Schenectady Chemical. La quantité d'antioxydant peut varier de 10 ppm à 1000 ppm et plus préférentiellement de 25 ppm à 300 ppm.

La réaction de polymérisation objet du procédé de la présente invention peut être conduite à toutes températures adaptées à la polymérisation en suspension, en micro-suspension, en émulsion ou en micro-émulsion, et sont de préférence comprises entre 45°C et 80°C, de préférence encore entre 50°C et 70°C, ce qui rend possible l'utilisation d'une très grande diversité d'initiateurs de polymérisation. Lorsque la température de polymérisation choisie n'est pas très élevée (par exemple entre 30°C et 50°C), il peut s'avérer utile d'employer une combinaison de différents initiateurs ayant des demi-vies dans la gamme de la température choisie, comprenant par exemple une combinaison de peroxydicarbonate de dialkyle et d'un initiateur de la famille des peroxy-*tert*-alcanoates, ou une combinaison des initiateurs de la famille des peroxy-*tert*-alcanoates comprenant un peroxy-*tert*-alcanoate et un peroxy-tert-alcanoate.

Lorsque la température de polymérisation choisie est légèrement plus élevée (entre 55°C et 65°C), il peut s'avérer utile d'employer une combinaison de différents initiateurs ayant des demi-vies à la température choisie, comprenant par exemple un peroxydicarbonate de dialkyle et un initiateur de la famille des peroxy-*tert*-dialcanoates, ou une combinaison de peroxy-*tert*-alcanoates.

Les peroxy-*tert*-alcanoates précités ont généralement une demi-vie de 1 heure entre 40°C et 75°C et peuvent donc être utilisés pour des températures de polymérisation de chlorure de vinyle comprises entre 50°C et 70°C. Parmi ces peroxy-*tert*-alcanoates, on peut citer, à titre d'exemples non limitatifs, les peroxy-*tert*-alcanoates de *tert*-butyle et de *tert*-amyle.

Dans le cas d'une température de polymérisation assez élevée (entre 62°C et 70°C), il peut s'avérer utile d'employer une combinaison de différents initiateurs ayant des demi-vies à la température choisie, comprenant par exemple un peroxydicarbonate de dialkyle ou d'un peroxy-*tert*-alcanoate et un initiateur lente (demi-vie longue) de la famille des peroxydes de diacyle, tels que le peroxyde de dilauroyle.

Le procédé selon l'invention peut être effectué selon toute méthode connue de l'homme du métier et consistant, par exemple, à dissoudre un colloïde protecteur dans un milieu aqueux ou un monomère, pour disperser l'initiateur liposoluble de polymérisation en milieu aqueux ou le dissoudre dans le composant monomère, et éventuellement dissoudre un système tampon, afin de réguler, contrôler le pH du milieu réactionnel.

Les traces d'oxygène sont avantageusement éliminées, afin d'avoir une teneur résiduelle en oxygène dissous dans l'eau comprise entre 0,0005 et 0,05 parties en poids, de préférence entre 0,001 et 0,02 parties en poids, pour 100 parties en poids d'eau. Le au moins un monomère à polymériser est ensuite introduit dans le réacteur, puis le mélange réactionnel est agité et porté à une température comprise entre 45°C et 80°C, de préférence entre 50°C et 70°C.

Il n'est pas nécessaire, lors de la polymérisation, de maintenir constantes la pression et la température du mélange réactionnel. Une augmentation de la température programmée, soit au début ou à la fin du cycle de polymérisation, permet d'accélérer le rythme de décomposition des initiateurs et le taux de polymérisation. Si la température et la pression sont maintenues constantes, la polydispersité des masses moléculaires des chaînes de polymère se situe entre 1,8 et 2,5. Dans le cas d'une polymérisation avec gradients de température programmée pendant toute la durée de la polymérisation, une polydispersité comprise entre 1,8 et 3,5 sont observées. Ces éléments sont parfaitement connus de l'homme du métier.

La réaction de polymérisation se termine par épuisement de la phase de monomère liquide qui se caractérise par une modification de l'équilibre monomère liquide/vapeur d'équilibre et une chute de la pression réactionnelle. Juste avant la chute de pression réactionnelle, la conversion en masse de monomère se situe généralement dans l'intervalle compris entre 65% et 85%. Lorsque le taux de conversion souhaité est atteint, l'agent d'arrêt de polymérisation, le « shortstopper », est introduit dans le réacteur, afin de détruire ou de rendre inactifs les éventuels traces résiduelles d'initiateur.

Une fois la polymérisation terminée, le polymère formé est séparé du milieu aqueux, puis est essoré et séché. Le polymère obtenu, notamment dans le cas d'un procédé en suspension ou en micro-suspension se présente généralement sous la forme de particules, dont la taille est généralement comprise entre 80 µm et 250 µm.

Dans un mode de réalisation préféré de l'invention, on réalise une polymérisation en suspension du chlorure de vinyle, selon les méthodes bien connues de l'homme du métier, en utilisant, de manière optimale, une quantité d'initiateur de type peroxydicarbonate (ou un mélange d'initiateurs dont peroxydicarbonate et perester « rapide »), puis la polymérisation est arrêtée par addition, pendant la chute de pression, d'un « shortstopper » de type alkylhydroxylamine, dont la quantité est basée sur une relation empirique.

Selon le procédé de la présente invention, il a été découvert que l'ajout, au milieu réactionnel de polymérisation, d'au moins un perhalogénate avec au moins un agent d'arrêt de polymérisation, permet l'obtention d'un produit de polymérisation présentant d'excellentes propriétés de blancheur, par rapport aux mêmes produits de polymérisation obtenus sans l'ajout de perhalogénate.

L'addition d'au moins un perhalogénate dans le milieu réactionnel de polymérisation peut être effectuée au début, pendant ou en fin de réaction de polymérisation, de préférence pendant ou en fin de réaction, de préférence encore en fin de réaction.

Lorsque le au moins un perhalogénate est ajouté en fin de réaction, celui-ci peut être ajouté avant, pendant, ou après l'addition de l'agent d'arrêt de polymérisation. Plus précisément, le ou les perhalogénate(s) et le ou les agent(s) d'arrêt de polymérisation peuvent être ajoutés de manière simultanée, séquencée ou séparée, de préférence de manière simultanée.

La quantité de perhalogénate(s) ajoutée peut varier dans de grandes proportions, mais en général on préfère ajouter une quantité comprise entre 0,1 et 10 moles de perhalogénate(s) pour 1 mole d'agent d'arrêt de polymérisation, de préférence cette quantité est comprise entre 0,5 et 5 moles, de préférence encore entre 0,5 et 2 moles. Des propriétés de blancheur tout à fait satisfaisantes ont par exemple été obtenues en utilisant une mole de perhalogénate(s) pour une mole d'agent d'arrêt de polymérisation.

Dans un mode de réalisation plus préféré, le peroxyde utilisé est le peroxydicarbonate de di-2-éthylhexyle, l'agent d'arrêt de polymérisation est une di-alkylhydroxylamine, de préférence la N,N-diéthylhydroxylamine (DEHA) et le perhalogénate est le perchlorate de sodium.

Selon encore un autre aspect, la présente invention concerne une composition comprenant au moins un agent d'arrêt de polymérisation et au moins un perhalogénate, de préférence au moins un perhalogénate de métal alcalin ou de métal alcalino-terreux.

Cette composition peut être avantageusement utilisée dans les procédés de polymérisation et de copolymérisation de monomères vinyliques halogénés, comme décrits précédemment. Cette composition comprend avantageusement au moins un dérivé d'hydroxylamine, par exemple la diéthylhydroxylamine, et au moins un perhalogénate, par exemple le perchlorate de sodium.

La composition selon la présente invention peut en outre comprendre un ou plusieurs additifs et/ou solvants, par exemple choisis parmi l'eau, les alcools, les stabilisants et co-stabilisants (en particulier les stabilisants et co-stabilisants thermiques décrits ci-dessus), les colorants, et autres additifs et solvants connus de l'homme du métier.

Une composition tout particulièrement préférée comprend, et de préférence encore consiste en, au moins un agent d'arrêt de polymérisation, au moins un perhalogénate, au moins un stabilisant et/ou co-stabilisant thermique choisi parmi les antioxydants, les sels métalliques, les acides mercaptocarboxyliques, les beta dicétones, les huiles époxydées, les phosphites, les dérivés aminouracile, les costabilisants minéraux, les composés de type dihydropyridine, et de l'eau, par exemple et de manière non limitative, la composition selon l'invention comprend, et de préférence consiste en, de la diéthylhydroxylamine, du perchlorate de sodium et de l'eau.

Une composition permettant l'obtention de PVC présentant une excellente stabilité thermique et une excellente blancheur comprend généralement :
- de 5% à 40% en poids de diéthylhydroxylamine, de préférence de 10% à 30% en poids, par exemple environ 20% en poids ;
- de 5% à 40% en poids de perchlorate de sodium, de préférence de 10% à 30% en poids, par exemple environ 20% en poids ;
- éventuellement jusqu'à 20% en poids d'un ou plusieurs stabilisants et/ou co-stabilisants ; et
- le complément à 100% en poids d'eau.

Les exemples suivants permettent d'illustrer l'invention qui vient d'être décrite, et ne sont pas destinés à limiter cette invention aux modes de réalisation précis qui y sont décrits. De nombreuses autres variantes et modifications sont possibles à la lumière de la description qui précède et desdits exemples qui suivent.

### Exemple 1 : Production de S-PVC (procédé en suspension) (comparatif)

Dans un réacteur d'une capacité de 1200 litres, on introduit 60 kg d'eau déminéralisée, 204,5 g d'alcool polyvinylique ayant un degré d'hydrolyse de 88% molaire, 153,1 g d'alcool polyvinylique ayant un degré d'hydrolyse de 72% molaire, 90,5 g d'une solution aqueuse (comprenant 40% de matière active) de poly(alcool vinylique) ayant un degré d'hydrolyse de 55% molaire et 549 g d'une émulsion de peroxydicarbonate di-(2-éthylhexyle) comprenant 60% de matière active (Luperox™ 223 EN60H de la société Arkema). Les composants précités sont introduits à température ambiante et sous agitation (100 tr/min), dans le réacteur de 1200 L qui est équipé d'un agitateur de type turbine comportant trois bras, d'une enveloppe chauffante, d'une contre-pâle et d'un condenseur.

Après avoir fermé le réacteur, il est mis sous vide partiel (6,66 kPa absolu), et maintenu sous vide pendant 15 minutes. L'agitation est ensuite portée à 265 tr/min et on démarre simultanément les pompes pour injecter 362 kg de chlorure de vinyle et 286 L d'eau chaude à 95°C. La durée d'injection du chlorure de vinyle est mesurée à 12 min. La durée d'injection de l'eau chaude est mesurée à 15 min. La température de fin de chargement est à d'environ 50°C.

Le chauffage est régulé par circulation d'un mélange eau froide/eau chaude régulé en température dans la double enveloppe pour atteindre, en 10 minutes, la température de polymérisation de 56,5°C. Le moment où le milieu de polymérisation atteint 56,5°C est considéré comme le début de la polymérisation (= temps t0) et la pression à cet instant (P0) est alors prise comme référence.

Après 5 minutes de polymérisation (c'est à dire au temps t0 + 5 min), 200 kg d'eau sont introduits en continu dans le réacteur avec un débit constant de 75 kg/h pour améliorer l'échange thermique tout en gardant constante la surface d'échange de la double-enveloppe et diminuer la viscosité de la suspension aqueuse.

Après 7 minutes de polymérisation (c'est à dire au temps t0 + 7 min), Le condenseur est mis en service assurer un échange thermique permettant de maintenir la température constante dans le réacteur. La mise en service du condenseur est linéaire pour atteindre en 30 minutes (c'est à dire au temps t0 + 37 min) une puissance d'échange thermique constante de 20 000 kcal/h.

L'épuisement de la phase gazeuse (monomère) dans le réacteur se traduit par une chute de pression entre 65% et 70% de conversion. Dès que la pression a chuté de 0,3 bar par rapport à P0, le refroidissement du milieu de polymérisation par le condenseur est arrêté, et la température de polymérisation augmente. Cette augmentation est contrôlée par un ajustement du refroidissement de la double enveloppe. Ce contrôle permet une élévation régulière de la température du milieu de polymérisation.

Dès que la température atteint 65°C on stoppe la polymérisation. Cette dernière étape de polymérisation jusqu'à l'atteinte de la température de 65°C est appelée HK (« Heat Kick » en langue anglaise). La fin du HK correspond à l'atteinte de cette température de 65°C. La polymérisation est alors stoppée par ajout d'une solution aqueuse à 85% de diéthylhydroxylamine (DEHA) qui est injectée dans le milieu réactionnel pendant 1 minute. La quantité ajoutée correspond à 115 ppm en poids de DEHA par rapport au poids initial de monomère. Le milieu réactionnel est maintenu à 65°C pendant 1 minute avant d'être refroidi. Le refroidissement rapide du milieu est effectué au moyen d'eau froide injectée dans la double enveloppe.

Le monomère résiduel est ensuite éliminé du milieu réactionnel par des techniques classiques, par exemple par retour à la pression atmosphérique (dégazage) et les traces de monomères sont ensuite éliminées par dégazage sous vide de 13,33 kPa à 50°C (« stripping » en langue anglaise).

La bouillie de PVC ainsi obtenue est alors essorée en utilisant une centrifugeuse rotative. La poudre humide de PVC est ensuite séchée pendant 12 heures dans un sécheur rotatif sous vide d'air sec chauffé à 60°C. La poudre de PVC sèche est ensuite tamisée à travers un maillage de 500 µm.

L'indice de blancheur (« WI » ou « White Index » en langue anglaise) de cette résine est évalué par mesure de la valeur WI par un Colorimètre Konica Minolta, CM2500D, selon la norme ISO 2470. Un nouvel indice de blancheur WI de cette résine traitée thermiquement est réalisé par la même technique de mesure.

Le traitement thermique est réalisé en disposant un cristallisoir, en verre borosilicaté de diamètre extérieur 70 mm, de hauteur 40 mm et de masse 45 g, contenant entre 9,5 g et 10,5 g de résine PVC, dans une étuve ventilée de type Série Heraeus UT6 à convection forcée. L'étuve est chauffée à une température stable de 160°C. Le cristallisoir est ensuite déposé au centre de l'étuve et exposé durant 10 minutes à cette température.

La résine est ensuite refroidie dans un dessiccateur puis tamisée sur maille de 250 µm. La résine est prête pour la mesure de WI après traitement thermique.

### Exemple 2 : Production de S-PVC (procédé en suspension) (comparatif)

La polymérisation a été effectuée comme dans l'exemple 1, sauf que, à la fin du HK, une solution aqueuse à 50 % de perchlorate de sodium (NaClO₄) est injectée dans le milieu réactionnel pendant 1 minute. La quantité ajoutée correspond à 115 ppm en poids de NaClO₄ par rapport au poids initial de monomère. Le milieu réactionnel est maintenu à 65°C pendant 1 minute avant d'être refroidi. Le dégazage, le stripping, la vidange, la centrifugation, le séchage et le tamisage ont ensuite été réalisés de la même manière que dans l'exemple 1 et les résines polymères ainsi obtenues sont évaluées dans le test WI selon le même critère.

### Exemple 3 : Production de S-PVC (procédé en suspension)

On réalise une polymérisation de chlorure de vinyle selon le mode opératoire de l'exemple 1, à la différence toutefois que l'on ajoute, au lieu de DEHA seule, un mélange A composé de DEHA, de perchlorate de sodium et d'eau, dans les proportions pondérales respectives 20/20/60. La quantité ajoutée correspond à 575 ppm en poids du mélange A par rapport au poids initial de monomère. Le milieu réactionnel est maintenu à 65°C pendant 1 minute avant d'être refroidi. Le dégazage, le stripping, la vidange, la centrifugation, le séchage et le tamisage ont ensuite été réalisés de la même manière que dans l'exemple 1 et les résines polymères ainsi obtenues sont évaluées dans le test WI selon le même critère.

### Exemple 4 : Production de S-PVC (procédé en suspension)

On réalise une polymérisation de chlorure de vinyle selon le mode opératoire de l'exemple 1, à la différence toutefois que l'on ajoute, après la DEHA, une solution aqueuse de perchlorate de sodium. La quantité ajoutée correspond à 115 ppm en poids de DEHA et 115 ppm en poids de NaClO₄ par rapport au poids initial de monomère. Le milieu réactionnel est maintenu à 65°C pendant 1 minute avant d'être refroidi. Le dégazage, le stripping, la vidange, la centrifugation, le séchage et le tamisage ont ensuite été réalisés de la même manière que dans l'exemple 1 et les résines polymères ainsi obtenues sont évaluées dans le test WI selon le même critère.

### Exemple 5 : Production de S-PVC (procédé en suspension)

On réalise une polymérisation de chlorure de vinyle selon le mode opératoire de l'exemple 4, à la différence toutefois que l'on ajoute, à la place de la DEHA, une émulsion aqueuse d'Irgastab® PVC11EM. L'Irgastab® PVC11EM est considéré comme un short-stopper en polymérisation du PVC. La quantité ajoutée correspond à 485 ppm en poids d'Irgastab® PVC11EM par rapport au poids initial de monomère. La solution aqueuse de perchlorate de sodium, correspondant à 115 ppm en poids de NaClO₄ par rapport au poids initial de monomère est toujours ajoutée en respectant l'ordre d'introduction de l'essai 4. Le milieu réactionnel est maintenu à 65°C pendant 1 minute avant d'être refroidi. Le dégazage, le stripping, la vidange, la centrifugation, le séchage et le tamisage ont ensuite été réalisés de la même manière que dans l'exemple 1 et les résines polymères ainsi obtenues sont évaluées dans le test WI selon le même critère.

### Exemple 6 : Production de S-PVC (procédé en suspension)

On réalise une polymérisation de chlorure de vinyle selon le mode opératoire de l'exemple 4, à la différence toutefois que l'on ajoute, à la place de la DEHA, une solution de BHA (t-butylhydroxyanisole, n° CAS 25013-16-5) à 20% en poids dans l'éthanol. Cette solution est considérée comme un short-stopper en polymérisation du PVC. La quantité ajoutée correspond à 54 ppm en poids de BHA par rapport au poids initial de monomère. La solution aqueuse de perchlorate de sodium, correspondant à 115 ppm en poids de NaClO₄ par rapport au poids initial de monomère est toujours ajoutée en respectant l'ordre d'introduction de l'essai 4. Le milieu réactionnel est maintenu à 65°C pendant 1 minute avant d'être refroidi. Le dégazage, le stripping, la vidange, la centrifugation, le séchage et le tamisage ont ensuite été réalisés de la même manière que dans l'exemple 1 et les résines polymères ainsi obtenues sont évaluées dans le test WI selon le même critère.

### Exemple 7 : Production de S-PVC (procédé en suspension)

On réalise une polymérisation de chlorure de vinyle selon le mode opératoire de l'exemple 4, à la différence toutefois que l'on ajoute, à la place de la DEHA, une solution d'Irganox® 1076 (octadécyl-3,5-di-*tert*-butyl-4-hydroxyhydrocinnamate, n° CAS 2082-79-3) à 10% en poids dans l'isododécane (n° CAS 31807-55-3). La quantité ajoutée correspond à 225 ppm en poids d'Irganox® 1076 par rapport au poids initial de monomère. La solution aqueuse de perchlorate de sodium, correspondant à 115 ppm en poids de NaClO₄ par rapport au poids initial de monomère est toujours ajoutée en respectant l'ordre d'introduction de l'essai 4. Le milieu réactionnel est maintenu à 65°C pendant 1 minute avant d'être refroidi. Le dégazage, le stripping, la vidange, la centrifugation, le séchage et le tamisage ont ensuite été réalisés de la même manière que dans l'exemple 1 et les résines polymères ainsi obtenues sont évaluées dans le test WI selon le même critère.

### Exemple 8 : Production de S-PVC (procédé en suspension)

On réalise une polymérisation de chlorure de vinyle selon le mode opératoire de l'exemple 3, à la différence toutefois que l'on ajoute au départ dans le réacteur avant de le fermer, l'anti-oxydant Irganox® 1076 (octadecyl-3,5-di-*tert*-butyl-4-hydroxyhydrocinnamate, n° CAS 2082-79-3) à 10% en poids dans l'isododécane (n° CAS 31807-55-3). La quantité ajoutée correspond à 225 ppm en poids d'Irganox® 1076 par rapport au poids initial de monomère. Le mode opératoire reste ensuite identique à celui de l'exemple 3. Les résines polymères ainsi obtenues sont évaluées dans le test WI selon le même critère. Cet exemple montre que l'anti-oxydant ajouté en début de polymérisation n'a pas d'influence sur l'action du shortstopper et du perhalogénate en ce qui concerne l'indice de blancheur avant et après traitement thermique, et donc que les anti-oxydants classiquement connus peuvent être utilisés également dans le procédé selon l'invention.

### Exemple 9 : Production de S-PVC (procédé en suspension) (comparatif)

On réalise une polymérisation de chlorure de vinyle selon le mode opératoire de l'exemple 1, à la différence toutefois que l'on ajoute au départ dans le réacteur avant de le fermer, l'anti-oxydant Irganox® 1076 à 10% en poids dans l'isododécane. La quantité ajoutée correspond à 225 ppm en poids d'Irganox® 1076 par rapport au poids initial de monomère. Le mode opératoire reste ensuite identique à celui de l'exemple 1. Les résines polymères ainsi obtenues sont évaluées dans le test WI selon le même critère.

### Exemple 10 : Production de S-PVC (procédé en suspension) (comparatif)

On réalise une polymérisation de chlorure de vinyle selon le mode opératoire de l'exemple 1, à la différence toutefois que l'on ajoute, à la place de la DEHA, une solution d'Irganox® 1076 à 10% en poids dans l'isododécane. La quantité ajoutée correspond à 225 ppm en poids d'Irganox® 1076 par rapport au poids initial de monomère. Le mode opératoire reste ensuite identique à celui de l'exemple 1. Les résines polymères ainsi obtenues sont évaluées dans le test WI selon le même critère.

### Exemple 11 : Production de S-PVC (procédé en suspension) (comparatif)

On réalise une polymérisation de chlorure de vinyle selon le mode opératoire de l'exemple 1, à la différence toutefois que l'on ajoute, à la place de la DEHA, une solution de BHA à 20% en poids dans l'éthanol. La quantité ajoutée correspond à 54 ppm en poids de BHA par rapport au poids initial de monomère. Le mode opératoire reste ensuite identique à celui de l'exemple 1. Les résines polymères ainsi obtenues sont évaluées dans le test WI selon le même critère.

Le test de blancheur WI donne les résultats présentés dans le tableau 1 suivant :

**-- Tableau 1 --**

| ***Exemple*** | ***WI initial*** | ***WI après traitement thermique*** |
|---|---|---|
| 1 | 96,7 | 77,4 |
| 2 | 96,4 | 65,8 |
| 3 | 97,0 | 85,2 |
| 4 | 96,9 | 84,6 |
| 5 | 96,2 | 80,0 |
| 6 | 93,2 | 78,1 |
| 7 | 96,1 | 76,2 |
| 8 | 97,4 | 84,9 |
| 9 | 96,9 | 77,4 |
| 10 | 95,6 | 66,5 |
| 11 | 93,1 | 70,3 |

## Revendications

1. Procédé de polymérisation en suspension aqueuse, en micro-suspension, en émulsion ou en micro-émulsion, d'au moins un monomère halogéné, en particulier chloré, par exemple de chlorure de vinyle, seul ou avec un ou plusieurs autres monomères vinyliques, de préférence moins de 50% en poids d'un ou plusieurs autres monomères vinyliques, dans lequel on ajoute au moins un agent d'arrêt de polymérisation et au moins un perhalogénate, en tant qu'agent de blanchiment.

2. Procédé selon la revendication 1, dans lequel la polymérisation est réalisée en présence d'au moins un initiateur de polymérisation.

3. Procédé selon l'une quelconque des revendications 1 ou 2, dans lequel l'agent d'arrêt de polymérisation est choisi parmi les dérivés phénoliques et les hydroxylamines mono-alkyl-N- ou dialkyl-N,N-substituées, chaque radical alkyle comportant de 1 à 4 atomes de carbone, ainsi que les mélanges de deux ou plusieurs d'entre eux en toutes proportions.

4. Procédé selon l'une quelconque des revendications 1 à 3, dans lequel le au moins un perhalogénate est un perhalogénate organique ou minéral choisi parmi les perhalogénates métalliques, les perhalogénates de métal alcalin ou de métal alcalino-terreux, de préférence parmi les perchlorates de métal alcalin ou de métal alcalino-terreux, et avantageusement le au moins un perhalogénate est le perchlorate de sodium.

5. Procédé selon l'une quelconque des revendications précédentes, dans lequel la polymérisation est initiée avec au moins un initiateur de polymérisation choisi parmi les peroxydicarbonates de dialkyle, les peroxy-*tert*-alcanoates, les peroxydes de diacyle et les hydroperoxydes d'alkyle, et autres.

6. Procédé selon l'une quelconque des revendications précédentes, comprenant un système d'amorçage comprenant au moins un composé choisi parmi les peroxydicarbonates de dialkyle, les peroxy-*tert*-alcanoates, les peroxydes de diacyle et les hydroperoxydes d'alkyle et au moins un agent d'arrêt de polymérisation, comportant au moins une N-mono-alkylhydroxylamine ou d'une N,N-dialkylhydroxylamine, et au moins un perhalogénate, de préférence au moins un perchlorate.

7. Procédé selon l'une quelconque des revendications précédentes, comprenant en outre au moins un additif de stabilité thermique choisi parmi les stabilisants thermiques ou co-stabilisants thermiques suivants : l'acide 2-éthylhexylmercapto-acétique, l'acide thioglycolique, ainsi que leurs esters, les carbonates de métaux alcalins, les β-dicétones, les huiles végétales époxydées, les phosphites, les esters β-cétoniques, les sels ou savons métalliques en particulier les stéarates, les adipates, les dérivés amino-uraciles et/ou dérivés thio-uraciles, les hydrazides, les composés minéraux hydrotalcites et zéolithes, les alcools et polyols, les dérivés du glycidyle, l'a-phénylindole, les composés de type dihydropyridine, les énamines, les dérivés de type alcanolamines, et autres, seuls ou en mélanges de deux ou plusieurs d'entre eux, en toutes proportions.

8. Utilisation d'une association d'au moins un agent d'arrêt de polymérisation avec au moins un perhalogénate, par exemple un perhalogénate de métal, de métal alcalin ou de métal alcalino-terreux, dans le procédé de préparation de polymères et de copolymères halogénés, en particulier de PVC.

9. Utilisation selon la revendication 8, dans laquelle l'agent d'arrêt de polymérisation est choisi parmi les dérivés phénoliques et les hydroxylamines mono-alkyl-N- ou dialkyl-N,N-substituées, chaque radical alkyle comportant de 1 à 4 atomes de carbone.

10. Utilisation selon la revendication 9, dans laquelle l'agent d'arrêt de polymérisation est choisi parmi la di-éthylhydroxylamine, le 4-OH-Tempo (1,4-dihydroxy-2,2,6,6-tétraméthylpipéridine), ainsi que les mélanges de deux ou plusieurs d'entre eux en toutes proportions.

11. Composition comprenant au moins un agent d'arrêt de polymérisation et au moins un perhalogénate métallique; l'agent d'arrêt de polymérisation étant choisi parmi le butylhydroxyanisole (BHA), le butylhydroxytoluène (BHT), le 2,4-diméthyl-6-*sec-*hexadécylphénol, l'octadécyl-3-(3,5-di-*tert*-butyl-4-hydroxyphényl)propionate] seul ou en mélange, et les hydroxylamines mono-alkyl-N- ou dialkyl-N,N-substituées.

12. Composition selon la revendication 11, dans laquelle l'agent d'arrêt de polymérisation est la diéthylhydroxylamine, le perhalogénate, est le perchlorate de sodium.

13. Composition selon l'une quelconque des revendications 11 ou 12 comprenant :
- de 5% à 40% en poids de diéthylhydroxylamine, de préférence de 10% à 30% en poids, par exemple environ 20% en poids ;
- de 5% à 40% en poids de perchlorate de sodium, de préférence de 10% à 30% en poids, par exemple environ 20% en poids ;
- éventuellement jusqu'à 20% en poids d'un ou plusieurs stabilisants et/ou co-stabilisants ; et
- le complément à 100% en poids d'eau.

## Patentansprüche

1. Verfahren zur wässrigen Suspensions-, Mikrosuspensions-, Emulsions- oder Mikroemulsionspolymerisation mindestens eines halogenierten, insbesondere chlorierten, Monomers, beispielsweise Vinylchlorid, alleine oder mit einem oder mehreren anderen Vinylmonomeren, vorzugsweise weniger als 50 Gew.-% eines oder mehrerer anderer Vinylmonomere, bei dem man mindestens einen Polymerisationsstopper und mindestens ein Perhalogenat als Bleichmittel zugibt.

2. Verfahren nach Anspruch 1, wobei die Polymerisation in Gegenwart mindestens eines Polymerisationsinitiators durchgeführt wird.

3. Verfahren nach Anspruch 1 oder 2, wobei der Polymerisationsstopper aus Phenolderivaten und monoalkyl-N- oder dialkyl-N,N-substituierten Hydroxylaminen, wobei jeder Alkylrest 1 bis 4 Kohlenstoffatome umfasst, sowie Mischungen von zwei oder mehr davon in beliebigen Verhältnissen ausgewählt wird.

4. Verfahren nach einem der Ansprüche 1 bis 3, wobei es sich bei dem mindestens einen Perhalogenat um ein organisches oder anorganisches Perhalogenat, das aus Metallperhalogenaten, Alkalimetallperhalogenaten oder Erdalkalimetallperhalogenaten und vorzugsweise aus Alkalimetallperchloraten oder Erdalkalimetallperchloraten ausgewählt ist, wobei es sich vorteilhafterweise bei dem mindestens einen Perhalogenat um Natriumperchlorat handelt.

5. Verfahren nach einem der vorhergehenden Ansprüche, wobei die Polymerisation mit mindestens einem Polymerisationsinitiator, der aus Dialkylperoxydicarbonaten, Peroxy-tert-alkanoaten, Diacylperoxiden und Alkylhydroperoxiden und anderen ausgewählt wird, initiiert wird.

6. Verfahren nach einem der vorhergehenden Ansprüche, umfassend ein Initiatorsystem, umfassend mindestens eine Verbindung, die aus Dialkylperoxydicarbonaten, Peroxy-tert-alkanoaten, Diacylperoxiden und Alkylhydroperoxiden ausgewählt ist, und mindestens einen Polymerisationsstopper, umfassend mindestens ein N-Monoalkylhydroxylamin oder N,N-Dialkylhydroxylamin, und mindestens ein Perhalogenat, vorzugsweise mindestens ein Perchlorat.

7. Verfahren nach einem der vorhergehenden Ansprüche, außerdem umfassend mindestens ein Wärmestabilisierungsadditiv, das aus den folgenden Wärmestabilisatoren oder Wärmecostabilisatoren ausgewählt ist: 2-Ethylhexylmercaptoessigsäure, Thioglykolsäure sowie deren Estern, Alkalimetallcarbonaten, β-Diketonen, epoxidierten Pflanzenölen, Phosphiten, β-Ketonestern, Metallsalzen oder -seifen, insbesondere Stearaten, Adipaten, Aminouracilderivaten und/oder Thiouracilderivaten, Hydraziden, anorganischen Hydrotalcit- und Zeolith-Verbindungen, Alkoholen und Polyolen, Glycidylderivaten, α-Phenylindol, Verbindungen vom Dihydropyridin-Typ, Enaminen, Derivaten vom Alkanolamin-Typ und anderen, alleine oder als Mischungen von zwei oder mehr davon in beliebigen Verhältnissen.

8. Verwendung einer Kombination von mindestens einem Polymerisationsstopp mit mindestens einem Perhalogenat, beispielsweise einem Metall-, Alkalimetall- oder Erdalkalimetallperhalogenat, bei dem Verfahren zur Herstellung von halogenierten Polymeren und Copolymeren, insbesondere PVC.

9. Verwendung nach Anspruch 8, wobei der Polymerisationsstopper aus Phenolderivaten und monoalkyl-N- oder dialkyl-N,N-substituierten Hydroxylaminen, wobei jeder Alkylrest 1 bis 4 Kohlenstoffatome umfasst, ausgewählt ist.

10. Verwendung nach Anspruch 9, wobei der Polymerisationsstopper aus Diethylhydroxylamin, 4-OH-Tempo (1,4-Dihydroxy-2,2,6,6-tetramethylpiperidin) sowie Mischungen von zwei oder mehr davon in beliebigen Verhältnissen ausgewählt ist.

11. Zusammensetzung, umfassend mindestens einen Polymerisationsstopper und mindestens ein Metallperhalogenat; wobei der Polymerisationsstopper aus Butylhydroxyanisol (BHA), Butylhydroxytoluol (BHT), 2,4-Dimethyl-6-sec-hexadecylphenol, Octadecyl-3-(3,5-di-tert-butyl-4-hydroxyphenyl)propionat alleine oder als Mischung und monoalkyl-N- oder dialkyl-N,N-substituierten Hydroxylaminen ausgewählt ist.

12. Zusammensetzung nach Anspruch 11, wobei es sich bei dem Polymerisationsstopper um Diethylhydroxylamin handelt und es sich bei dem Perhalogenat um Natriumperchlorat handelt.

13. Zusammensetzung nach Anspruch 11 oder 12, umfassend:
- 5 bis 40 Gew.-% Diethylhydroxylamin, vorzugsweise 10 bis 30 Gew.-%, beispielsweise ungefähr 20 Gew.-%;
- 5 bis 40 Gew.-% Natriumperchlorat, vorzugsweise 10 bis 30 Gew.-%, beispielsweise ungefähr 20 Gew.-%;
- gegebenenfalls bis zu 20 Gew.-% eines oder mehrerer Stabilisatoren und/oder Costabilisatoren; und
- Rest auf 100 Gew.-% Wasser.

## Claims

1. Process for the aqueous suspension, micro-suspension, emulsion or micro-emulsion polymerization of at least one halogenated, in particular chlorinated, monomer, for example vinyl chloride, by itself or with one or more other vinyl monomers, preferably less than 50% by weight of one or more other vinyl monomers, in which at least one shortstopper and at least one perhalogenate, acting as a whitening agent, are added.

2. Process according to Claim 1, in which the polymerization is carried out in the presence of at least one polymerization initiator.

3. Process according to either one of Claims 1 and 2, in which the shortstopper is selected from phenolic derivatives and mono-alkyl-N- or dialkyl-N,N-substituted hydroxylamines, each alkyl radical containing from 1 to 4 carbon atoms, and also mixtures of two or more thereof in any proportions.

4. Process according to any one of Claims 1 to 3, in which the at least one perhalogenate is an organic or mineral perhalogenate selected from metal perhalogenates, alkali metal or alkaline-earth metal perhalogenates, preferably from alkali metal or alkaline-earth metal perchlorates, and advantageously the at least one perhalogenate is sodium perchlorate.

5. Process according to any one of the preceding claims, in which the polymerization is initiated with at least one polymerization initiator selected from dialkyl peroxydicarbonates, peroxy-tert-alkanoates, diacyl peroxides and alkyl hydroperoxides, and others.

6. Process according to any one of the preceding claims, comprising an initiation system comprising at least one compound selected from dialkyl peroxydicarbonates, peroxy-tert-alkanoates, diacyl peroxides and alkyl hydroperoxides and at least one shortstopper, comprising at least one N-mono-alkylhydroxylamine or an N,N-dialkylhydroxylamine, and at least one perhalogenate, preferably at least one perchlorate.

7. Process according to any one of the preceding claims, further comprising at least one thermal stability additive selected from the following thermal stabilizers or thermal co-stabilizers: 2-ethylhexylmercaptoacetic acid, thioglycolic acid, and esters thereof, alkali metal carbonates, β-diketones, epoxidized vegetable oils, phosphites, β-ketone esters, metallic salts or soaps, in particular stearates, adipates, amino-uracil derivatives and/or thio-uracil derivatives, hydrazides, the mineral compounds hydrotalcites and zeolites, alcohols and polyols, glycidyl derivatives, α-phenylindole, compounds of the dihydropyridine type, enamines, alkanolamine type derivatives, and others, by themselves or as mixtures of two or more thereof, in any proportions.

8. Use of an association of at least one shortstopper with at least one perhalogenate, for example a metal, alkali metal or alkaline-earth metal perhalogenate, in the process for the preparation of halogenated polymers and copolymers, in particular PVC.

9. Use according to Claim 8, in which the shortstopper is selected from phenolic derivatives and mono-alkyl-Nor dialkyl-N,N-substituted hydroxylamines, each alkyl radical containing from 1 to 4 carbon atoms.

10. Use according to Claim 9, in which the shortstopper is selected from diethylhydroxylamine and 4-OH-Tempo (1,4-dihydroxy-2,2,6,6-tetramethylpiperidine), and also mixtures of two or more thereof in any proportions.

11. Composition comprising at least one shortstopper and at least one metal perhalogenate; the shortstopper being selected from butylhydroxyanisole (BHA), butylhydroxytoluene (BHT), 2,4-dimethyl-6-*sec-*hexadecylphenol, octadecyl-3-(3,5-di-tert-butyl-4-hydroxyphenyl)propionate, by itself or as a mixture, and mono-alkyl-N- or dialkyl-N,N-substituted hydroxylamines.

12. Composition according to Claim 11, in which the shortstopper is diethylhydroxylamine and the perhalogenate is sodium perchlorate.

13. Composition according to either one of Claims 11 and 12, comprising:
- from 5% to 40% by weight of diethylhydroxylamine, preferably from 10% to 30% by weight, for example approximately 20% by weight;
- from 5% to 40% by weight of sodium perchlorate, preferably from 10% to 30% by weight, for example approximately 20% by weight;
- optionally, up to 20% by weight of one or more stabilizers and/or co-stabilizers; and
- the balance to 100% by weight of water.
